# FASCICULE DE BREVET EUROPEEN

(11) **EP 0 465 365 B1**
(45) Date de publication et mention de la délivrance du brevet: **20.09.1995**
(21) Numéro de dépôt: 91401840.3
(22) Date de dépôt: 03.07.1991
(51) Int. Cl.: C08L 23/04, C08L 23/08, C09J 123/04, C09J 123/08

(54) **Composition thermoplastique comprenant un copolymère à base d'éthylène et d'anhydride maléique, et articles industriels obtenus à partir d'une telle composition**
Thermoplastische Zusammensetzung, welche ein Copolymer auf Basis von Äthylen und Maleinsäureanhydrid enthält und industrielle Produkte, hergestellt aus dieser Zusammensetzung
Thermoplastic composition comprising an ethylene-maleic anhydride copolymer and industrial articles made from said composition

(30) Priorité: 05.07.1990 FR 9008571
(43) Date de publication de la demande: 08.01.1992
(73) Titulaire: ELF ATOCHEM S.A., 92800 Puteaux (FR)
(72) Inventeur: Lebez, Jean, F-62300 Lens (FR)
(74) Mandataire: Chaillot, Geneviève

(56) Documents cités:
- EP-A- 0 312 664
- WO-A-89/06256
- US-A- 4 868 052

## Description

La présente invention porte sur des compositions thermoplastiques comprenant un copolymère à base d'éthylène, d'anhydride maléique et facultativement d'acrylates ou méthacrylates d'allyle, de telles compositions étant particulièrement utiles pour la fabrication de films ayant de bonnes propriétés adhésives, de même que pour la production de films composites et pour le revêtement de métaux.

Le brevet américain US-A-A 868 052 décrit une composition thermoplastique comprenant un mélange non-réticulé
(A) de 1 à 80% en poids d'au moins un polymère ou copolymère partiellement cristallin de l'éthylène, de densité 0,870 à 0,945, et
(B) de 20 à 99% en poids d'au moins un copolymère au hasard, non-élastomère, hydrophobe, comprenant :
   (i) de 83 à 99,7% en moles de motifs dérivés de l'éthylène ;
   (ii) de 0 à 14% en moles de motifs dérivés d'au moins un ester de l'acide acrylique ou méthacrylique ; et
   (iii) de 0,3 à 3% en moles de motifs dérivés de d'anhydride maléique,
   et ayant un indice de fusion de 1 à 500 dg/min. Sont également décrites dans ce document des compositions thermoplastiques chargées comprenant 67 à 99% en poids de (A) et 1 à 33% en poids de (B), et jusqu'à 100 parties pour 100 parties en poids du mélange (A) + (B) d'au moins une charge minérale.

Ces compositions fournissent des articles industriels tels que :
- des films adhésifs qui sont susceptibles de manifester de bonnes propriétés adhésives par rapport à divers substrats, tels que le verre, le tissu de polypropylène, la mousse de polyuréthanne et similaires, de tels films étant généralement obtenus à partir de compositions non-chargées où l'indice de fusion du copolymère (B) est choisi entre environ 1 et 30 dg/min ;
- des articles moulés à résistance au choc améliorée, les compositions étant, dans ce cas, chargées ;
- des films composites comprenant au moins une couche consistant en une composition thermoplastique non-chargée telle que définie ci-dessus et au moins une autre couche consistant en une autre matière thermoplastique, telle que, par exemple, le polyéthylène, le polypropylène, le poly-butène-1, le poly(méthyl-4 pentène-1), les polyamides, le polystyrène, le poly(chlorure de vinyle) et les copolymères éthylène/alcool vinylique ; et
- des métaux revêtus au moyen d'une première couche consistant en ladite composition non-chargée, cette première couche pouvant, si nécessaire, être revêtue par au moins une seconde couche consistant en une autre matière thermoplastique, telle qu'un polyéthylène basse densité, et procurant ainsi une protection efficace contre l'endommagement mécanique et/ou l'humidité.

La Société déposante a maintenant découvert que si l'on incorpore un caoutchouc et, le cas échéant, du talc dans des compositions thermoplastiques du type précité, comprenant un copolymère à base d'éthylène et d'anhydride maléique, on peut obtenir des films ayant de meilleures propriétés adhésives, ainsi que des films composites et des métaux revêtus par les systèmes bicouche et tricouche précités, qui présentent une meilleure tenue au décollement ou délaminage que les compositions non-chargées décrites dans le brevet américain US-A-4 868 052.

La présente invention a donc d'abord pour objet une composition thermoplastique comprenant un mélange :
(A) d'environ 25 à 80% en poids d'au moins un polymère ou copolymère partiellement cristallin de l'éthylène ayant une densité se situant entre environ 0,870 et 0,945 ;
(B) d'environ 15 à 85% en poids d'au moins un copolymère au hasard, comprenant :
   (a) d'environ 83 à 99,7% en moles de motifs dérivés de l'éthylène ;
   (b) de 0 à environ 14% en moles de motifs dérivés d'au moins un ester de l'acide acrylique ou méthacrylique ; et
   (c) d'environ 0,3 à 3% en moles de motifs dérivés de l'anhydride maléique ;
      et ayant un indice de fusion d'environ 1 à 500 dg/min ; et
(C) d'environ 1 à 8% en poids d'au moins un caoutchouc; et
(D) de 0 à 8% environ en poids de talc.

Le polymère (A) de la composition conforme à la présente invention peut être
- soit un polymère, obtenu par polymérisation par radicaux libres, sous pression élevée et à température élevée, comprenant au moins 98% en moles d'éthylène et au plus 2% en moles d'un comonomère polaire, tel que le monoxyde de carbone, l'acétate de vinyle, les acrylates d'alkyle et les méthacrylates d'allyle, où le groupe alkyle a de 1 à 12 atomes de carbone, un tel polymère ayant généralement une densité comprise entre environ 0,910 et 0,935 ;
- soit un copolymère, obtenu en présence d'un catalyseur de type Ziegler, comprenant au moins 79% en moles de motifs dérivés de l'éthylène et au plus 21% en moles de motifs alpha-oléfine ayant de 3 à 12 atomes de carbone.

La densité minimale de 0,870 correspondra généralement à un degré de cristallinité d'au moins 5%. Le degré de cristallinité sera généralement d'au moins 30% lorsque la densité du copolymère (A) sera d'au moins 0,905.

Pour la plupart des utilisations de la composition conforme à la présente invention, l'indice de fusion du copolymère (A), déterminé dans les conditions standard (190°C, échantillon de 2,16 kg) de la norme ASTM D-1238 sera avantageusement choisi entre environ 0,1 et 20 dg/min.

Le copolymère (B) de la composition conforme à la présente invention peut être préparé par copolymérisation directe de l'éthylène, de l'anhydride maléique, et, facultativement, d'un ester de l'acide acrylique ou méthacrylique, par exemple sous pression élevée et à température élevée, un tel procédé conduisant à l'obtention d'un copolymère au hasard. Des procédés appropriés à pression élevée et à haute température ont été décrits par exemple dans le brevet britannique GB-A-2 091 745 et dans les brevets américains US-A-4 617 366 et US-A-4 644 044.

Le rapport de l'indice de fusion standard du copolymère (B) à l'indice de fusion standard du polymère (A) sera choisi, de préférence, dans la plage d'environ 1:6 à environ 400:1. Le choix des indices de fusion respectifs du polymère (A) et du copolymère (B) sera naturellement adapté à l'application pour laquelle la composition de l'invention est destinée.

Il est généralement préférable que le copolymère (B) soit non-élastomère, et c'est la raison pour laquelle la proportion totale du ou des monomères autres que l'éthylène a été limitée à environ 17% en moles.

Le caoutchouc (C) peut être choisi notamment parmi le caoutchouc butyle, les caoutchoucs éthylènepropylène, les caoutchoucs éthylène-propylène-diène et leurs mélanges. Par caoutchouc éthylène-propylène, on entend des copolymères de 65 à 80% en moles d'éthylène et de 20 à 35% en moles de propylène, ayant une densité de 0,850 à 0,870, ne possédant aucune cristallinité résiduelle et donc pas de température de fusion cristalline. Par caoutchoucs éthylène-propylène-diène, on entend des terpolymères éthylène-propylène-diène, le diène étant choisi parmi les diènes linéaires ou cycliques, conjugués ou non-conjugués comme, par exemple, le butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylidène-2-norbornène, le 5-(2-propényl)-2-norbornène, le 5-(5-hexényl)-2-norbornène, le 1,5-cyclopentadiène, le bicyclo [2,2,2] octa-2,5-diène, le cyclopentadiène, le 4,7,8,9-tétrahydroindène et l'isopropylidène tétrahydroindène. De tels terpolymères élastomériques utilisables conformément à la présente invention comprennent en général entre 15% et 60% en moles de motifs dérivés du propylène et entre 0,1% et 20% en moles de motifs dérivés du diène.

La composition selon l'invention peut être obtenue par l'un quelconque des procédés de préparation suivants :
- le mélange simultané par n'importe quel moyen connu, en particulier dans un malaxeur ou une extrudeuse des polymères (A) et (B), du caoutchouc et du talc ;
- le malaxage d'un mélange mère de deux composants avec les composants restants ;
- le mélange du polymère (A) et du talc préalablement enrobé du copolymère (B), l'enrobage ayant été effectué par l'introduction du talc dans une solution du copolymère (B), puis évaporation du solvant. Des compositions appropriées du copolymère (B) sont obtenues lorsque le solvant est choisi, par exemple, parmi les hydrocarbures aliphatiques, cycloaliphatiques et aromatiques, ayant de 5 à 12 atomes de carbone, les cétones, les hydrocarbures chlorés, les acétates et esters de polyols, et lorsque la concentration du copolymère (B) dans ledit solvant ne dépasse pas environ 15% en poids.

La présente invention porte également sur l'utilisation de la composition telle que définie ci-dessus pour la fabrication d'un film ayant des propriétés adhésives.

La présente invention porte aussi sur un article industriel comprenant un métal revêtu par au moins une couche d'une composition thermoplastique telle que décrite précédemment.

Dans le cas de ces métaux revêtus, l'épaisseur de la couche de composition thermoplastique selon l'invention peut aller d'environ 10 à 500 µm. Il est par ailleurs avantageux que l'indice de fusion du copolymère (B) dans la composition thermoplastique se situe entre environ 2 et 10 dg/min.

Pour certaines applications spécifiques, telles que le revêtement de tubes d'acier, le métal revêtu peut comprendre en outre, entre le métal et la première couche, une couche d'une résine destinée à améliorer l'adhérence, telle que, par exemple, une résine époxy. Dans ce cas, la résine époxy peut être mélangée avec un durcisseur (par exemple, un anhydride ou un polyaminoamide) et facultativement un agent réticulant, puis appliquée à l'état liquide sur le métal à revêtir avec une épaisseur d'environ 10 à 200 µm.

Le procédé de revêtement d'un métal par la première couche comprend le revêtement du substrat métallique à une température comprise entre environ 140°C et 300°C par un film consistant en la composition thermoplastique décrite ci-dessus, la vitesse de déplacement dudit substrat métallique étant comprise entre environ 1 et 600 mètres par minute. Ladite vitesse de déplacement sera par exemple avantageusement choisie entre 40 et 600 mètres par minute dans le cas des tubes d'acier.

Le substrat métallique peut se trouver sous n'importe quelle forme, telle que plaques, feuilles ou tubes, ayant une épaisseur d'au moins 25 µm.

Les métaux revêtus conformément à l'invention ont des usages variés et largement répandus. Par exemple, des feuilles d'aluminium revêtues conformément à l'invention peuvent être utilisées dans l'industrie de l'emballage alimentaire pour protéger les denrées de l'humidité et conserver leur arôme. Comme autre exemple, le procédé de revêtement de l'invention peut être appliqué à des tubes d'acier, tels que des tubes pour transporter du pétrole ou des gaz, permettant ainsi de les protéger contre l'oxydation et les chocs. Dans le dernier cas, on préfère que le film de la composition thermoplastique conforme à l'invention soit revêtu par une couche, ayant une épaisseur notamment d'environ 50 à 5000 µm, d'une autre matière thermoplastique, telle qu'un polyéthylène de densité comprise entre 0,870 et 0,945 pouvant contenir une charge, telle que du noir de carbone.

La présente invention a également pour objet un film composite comprenant :
(a) au moins une couche comprenant une composition thermoplastique telle que décrite précédemment, avec la condition que la proportion de talc dans ladite composition ne dépasse pas la proportion suffisante pour procurer un effet anti-bloquant, c'est-à-dire environ 0,3% en poids, et
(b) au moins une couche d'une autre matière thermoplastique.

Cette autre matière thermoplastique peut être choisie parmi les polyesters, le polyéthylène, le poly-propylène, le poly-1-butène, le poly(méthyl-4 pentène-1), les polyamides, le polystyrène, le poly(chlorure de vinyle) et les copolymères éthylène/alcool vinylique.

Dans un tel composite, l'épaisseur de la couche selon l'invention peut aller d'environ 5 à 100 µm, et celle de l'autre composition thermoplastique d'environ 20 µm à environ 3000 µm et dépend de la matière thermoplastique utilisée. Par exemple elle se situe habituellement d'environ 20 à 100 µm pour le polyéthylène, le polypropylène, le poly-1-butène, les polyamides et les copolymères éthylène/alcool vinylique, d'environ 25 à 2000 µm pour le poly(chlorure de vinyle) et de 100 à 3000 µm pour le polystyrène. Chacune de ces couches peut être obtenue par extrusion à travers une filière plate ou par extrusion-soufflage à travers une filière cylindrique.

Les films composites de l'invention peuvent être obtenus par co-extrusion des deux matières thermoplastiques au moyen d'une filière plate ou d'une filière cylindrique, de préférence à une vitesse d'environ 2 à 200 mètres par minute et à une température allant d'environ 170°C à 290°C. Lorsque l'on utilise une filière cylindrique, le rapport de soufflage est, de préférence, choisi pour être entre environ 1 et 4.

Les exemples suivants illustrent la présente invention sans toutefois en limiter la portée. La norme utilisée pour mesurer l'indice de fusion est la norme ASTM D 1238-73 (indice de fusion mesuré à 190°C, sous 2,16 kg et exprimé en dg/min.) Les pourcentages indiqués sont en poids sauf indication contraire. Les tests utilisés sont les suivants :

### Test de décollement d'un composite bicouche appliqué sur métal

On chauffe à 190°C pendant 10 minutes une plaque d'acier sablé et une plaque de polyéthylène de recouvrement (PEr), les deux plaques ayant la dimension 12 x 7 x 0,2 cm.

On applique sur la plaque d'acier une couche de la composition selon l'invention ou d'une composition comparative, sur une épaisseur de 0,32 µm, puis on pose la plaque de PEr. On assure la cohésion par passage d'un rouleau, puis on refroidit l'ensemble pendant 5 minutes dans l'eau courante.

Après 2 heures de repos, on mesure la force de décollement sur une éprouvette de 10 cm de largeur, à l'aide d'un dynamomètre à une vitesse de 32 mm/minute. Le résultat est exprimé en kg/5 cm (N/5 cm).

### Test de décollement d'un composite tricouche appliqué sur métal

On procède comme pour le test précédent excepté que l'on applique une fine couche (50 µm d'épaisseur) de résine époxyde sur la plaque d'acier.

### Test de délaminage d'un composite bicouche (composition de l'invention ou composition comparative)-polyester.

On fabrique un composite tricouche à l'aide d'une presse à compression de la façon suivante :

Entre deux plaques de Terphane® (polyester) de 350 x 350 mm, ayant une épaisseur de 170 µm, on place 10 g/m² de la composition selon l'invention ou d'une composition comparative. On maintient en contact sous une force de 49 N, à une température de 150°C. Après 24 heures de repos, on obtient, au démoulage, une plaque composite de 160 µm d'épaisseur environ.

On mesure alors la force de décollement d'une couche de polyester (l'autre servant de support), sur dynamomètre, avec une vitesse de 25 mm/minute. Le résultat est exprimé en kg/5 cm (N/5 cm).

### Exemple 1

On prépare, par malaxage à chaud, une composition formulée comme suit (en %) :

| | |
|---|---|
| - Copolymère éthylène/butène-1, de densité 0,910, possédant un indice de fluidité de 1, un pic de fusion cristalline de 116°C et un taux de cristallinité de 30%, commercialisé sous la dénomination NORSOFLEX® FW 1600 | 43 |
| - Terpolymère à 92% d'éthylène, 5% d'acrylate de butyle et 3% d'anhydride maléique, possédant un indice de fluidité de 1,0 et une densité de 0,940, commercialisé sous la dénomination LOTADER® 2200 | 50 |
| - Caoutchouc butyle de viscosité Mooney 1+8 à 125°C de 50-51 | 3 |
| - Talc | 4 |

### Exemples 2 et 3

On procède comme à l'Exemple 1 excepté que l'on remplace le caoutchouc butyle par du caoutchouc éthylène-propylène de viscosité Mooney 1+8 à 127°C de 55 (Exemple 2), ou du caoutchouc éthylène-propylène-diène de viscosité Mooney 1+8 à 127°C de 35-45 (Exemple 3).

### Exemple 4 (Comparatif)

On procéde comme à l'Exemple 1, excepté que l'on n'utilise ni talc ni caoutchouc et que les deux constituants restants sont utilisés dans le rapport pondéral 50:50.

| Résultats des tests de décollement | | | | |
|---|---|---|---|---|
| Type de Composite | PEr | Composition couche adhésive intermédiaire de l'Exemple | Décollement à 20°C | |
| | | | Départ | Palier |
| Tricouche | PEBDR * | 4 (Comp) | 100(981) | 115(1128,15) |
| | | 1 | 140(1373,4) | 130(1275,3) |
| | | 2 | 155(1520,6) | 100(981) |
| | | 3 | 120(1177,2) | 100(981) |
| | PEHD ** | 4 (Comp) | 130(1275,3) | 120(1177,2) |
| | | 1 | 160(1569,6) | 150(1471,5) |
| | | 2 | 160(1569,6) | 140(1373,4) |
| | | 3 | 155(1520,6) | 140(1373,4) |
| Bicouche | PEBDR * | 4 (Comp) | 50(490,5) | 30(294,3) |
| | | 1 | 100(981) | 80(784,8) |
| | | 2 | 90(882,9) | 50(490,5) |
| | | 3 | 90(882,9) | 50(490,5) |
| | PEHD ** | 4 (Comp) | 50(490,5) | 20(196,2) |
| | | 1 | 130(1275,3) | 140(1373,4) |
| | | 2 | 130(1275,3) | 80(784,8) |
| | | 3 | 90(882,9) | 70(686,7) |

| | | | | |
|---|---|---|---|---|
| * PEBDR : polyéthylène basse densité radicalaire | | | | |
| ** PEHD : polyéthylène haute densité | | | | |

### Exemple 5

On prépare, par malaxage à chaud, une composition formulée comme suit (en %) :

| | |
|---|---|
| NORSOFLEX® FW 1600 | 46 |
| LOTADER® 2200 | 47 |
| Caoutchouc butyle | 3 |
| Talc | 4 |

| Résultats des tests de décollement | | | | | |
|---|---|---|---|---|---|
| Type de Composite | PEr | Décollement | | | |
| | | Après 24 heures | | Après 4000 heures d'étuve ventilée à 75°C | |
| | | Départ | Palier | Départ | Palier |
| Tricouche | PEr1 * | 140(1373,4) | 190(1863,9) | 125(1226,25) | 150(1471,5) |
| | PEr2 ** | 130(1275,3) | 100(981) | 125(1226,25) | 130(1275,3) |
| Bicouche | PEr1 | 105(1030,05) | 140(1373,4) | 90(882,9) | 175(1716,75) |
| | PEr2 | 130(1275,3) | 100(981) | 230(2256,3) | 215(2109,15) |
| Bicouche *** | PEr1 | 55(539,55) | 100(981) | 20(196,2) | 50(490,5) |
| | PEr2 | 100(981) | 60(588,6) | 205(2011,05) | 225(2207,25) |

| | | | | | |
|---|---|---|---|---|---|
| * PEr1 = Compound polyéthylène basse densité radicalaire, de densité 0,923, d'indice de fluidité 0,3, auquel on a incorporé 3% de noir de carbone, commercialisé sous la dénomination LOTRENE® TB 3026^{SP} | | | | | |
| ** PEr2 = polyéthylène haute densité commercialisé par la Société HOESCHT | | | | | |
| *** Plaque d'acier chauffée à 130°C seulement. | | | | | |

### Exemple 6

On prépare, par malaxage à chaud, la composition formulée comme suit (en %) :

| | |
|---|---|
| - NORSOFLEX® FW 1600 | 19 |
| - Copolymère éthylène-butène-1 basse densité (d = 0,900), et d'indice de fluidité 1,1, commercialisé sous la dénomination NORSOFLEX® FW 1900 | 18,5 |
| - Terpolymère comprenant 85% en poids d'éthylène, 12% en poids d'acrylate d'éthyle et 3% en poids d'anhydride maléique, d'indice de fusion 2,4, de densité 0,940, commercialisé sous la dénomination LOTADER® TX 8030 | 53 |
| - Talc | 3,5 |
| - Caoutchouc butyle | 5 |

### Exemple 7

On prépare, par malaxage à chaud, la composition suivante :

| | |
|---|---|
| - NORSOFLEX® FW 1600 | 67 |
| - LOTADER® TX 8030 | 25 |
| - Talc | 3 |
| - Caoutchouc butyle | 5 |

| Résultats des tests de décollement | | | | |
|---|---|---|---|---|
| Type de Composite | PEr | Composition adhésive de l'Exemple | Test de Décollement à 20°C | |
| | | | Départ | Palier |
| Tricouche | PEr3 * | 6 | 115(1128,15) | 80(784,8) |
| | PEr2 | | 125(1226,25) | 90(882,9) |
| Bicouche | PEr3 | 6 | 90(882,9) | 90(882,9) |
| | PEr2 | | 100(981) | 80(784,8) |
| Tricouche | PEr3 | 7 | 90(882,9) | 90(882,9) |
| | PEr2 | | 125(1226,25) | 115(1128,15) |
| Bicouche | PEr3 | 7 | 80(784,8) | 55(539,55) |
| | PEr2 | | 70(686,7) | 60(588,6) |

| | | | | |
|---|---|---|---|---|
| * PEr : Compound de polyéthylène basse densité radicalaire d = 0,934, indice de fusion 0,3 et à 2,4% de noir de carbone commercialisé sous la dénomination "LOTRENE® TE 3017" | | | | |

### Exemple 8

On prépare, par malaxage à chaud, la composition formulée comme suit (indice de fluidité : 1,4):

| | |
|---|---|
| - NORSOFLEX® FW 1600 | 19 |
| - NORSOFLEX® FW 1500 | 20 |
| - LOTADER® TX 8030 | 50 |
| - Caoutchouc butyle | 5 |
| - Mélange-maître contenant 30% de talc et 70% de LOTADER® TX 8030 | 6 |

| Résultats des tests de décollement | | | |
|---|---|---|---|
| Type de Composite | PEr | Test de Décollement à 20°C | |
| | | Départ | Palier |
| Tricouche | PEr3 | 125(1226,25) | 110(1079,1) |
| | PEr2 | 100(981) | 50(490,5) |

### Exemples 9 à 12

On prépare, par malaxage à chaud, les compositions formulées comme suit :

| Ingrédients | Exemples | | | |
|---|---|---|---|---|
| | 9 | 10 (Comparatif) | 11 | 12 |
| NORSOFLEX® FW 1600 | 19 | 19 | 39 | 19 |
| NORSOFLEX® FW 1900 | 0 | 0 | 0 | 20 |
| LOTADER® TX 8030 | 77 | 76 | 50 | 50 |
| Caoutchouc butyle | 4 | 0 | 5 | 5 |
| Mélange-maître contenant 30% de talc et 70% de LOTADER® TX 8030 | 0 | 5 | 6 | 6 |

| Résultats des tests de délaminage d'un composite polyester | | | |
|---|---|---|---|
| Composition de l'Exemple | Indice de fluidité | Test de décollement | |
| | | Début | Palier |
| 9 | 2,10 | 110(1079,1) | 120(1177,2) |
| 10 | 2,00 | 95(931,95) | 105(1030,05) |
| 11 | 1,5 | 87,5(858,4) | 105(1030,05) |
| 12 | 1,4 | 105(1030,05) | 95(931,95) |

## Revendications (Revendications pour l'(les) Etat(s) contractant(s) suivant(s): AT, BE, CH, DE, DK, FR, GB, GR, IT, LI, LU, NL, SE)

1. Composition thermoplastique à base d'un mélange :
(A) d'au moins un polymère ou copolymère partiellement cristallin de l'éthylène ayant une densité se situant entre 0,870 et 0,945 ;
(B) d'au moins un copolymère à base d'éthylène, d'anhydride maléique et facultativement d'acrylate ou méthacrylate d'alkyle,
caractérisée par le fait qu'elle comporte, comme additifs,
(C) au moins un caoutchouc et (D), le cas échéant, du talc.

2. Composition thermoplastique selon la revendication 1, caractérisée par le fait qu'elle comprend un mélange :
- de 25 à 80% en poids dudit constituant (A) ;
- de 15 à 85% en poids dudit constituant (B) formé d'au moins un copolymère au hasard, comprenant :
(a) de 83 à 99,7% en moles de motifs dérivés de l'éthylène ;
(b) de 0 à 14% en moles de motifs dérivés d'au moins un ester de l'acide acrylique ou méthacrylique ; et
(c) de 0,3 à 3% en moles de motifs dérivés de l'anhydride maléique ;
et ayant un indice de fusion de 1 à 500 dg/min ; et
- de 1 à 8% en poids d'au moins un caoutchouc (C) ; et
- de 0 à 8% en poids de talc (D).

3. Composition thermoplastique selon l'une des revendications 1 et 2, caractérisée par le fait que le caoutchouc (C) est choisi parmi le caoutchouc butyle, les caoutchoucs éthylène-propylène, les caoutchoucs éthylène-propylène-diène et leurs mélanges.

4. Utilisation de la composition telle que définie à l'une des revendications 1 à 3, pour la fabrication d'un film ayant des propriétés adhésives.

5. Article industriel comprenant un métal revêtu par au moins une couche d'une composition thermoplastique selon l'une des revendications 1 à 3.

6. Article selon la revendication 5, caractérisé par le fait que l'épaisseur de la couche de composition thermoplastique va de 10 à 500 µm.

7. Article selon l'une des revendications 5 et 6, caractérisé par le fait que l'indice de fusion du copolymère (B) dans la composition thermoplastique va de 2 à 10 dg/min.

8. Article selon l'une des revendications 5 à 7, caractérisé par le fait que le métal revêtu comprend en outre entre ledit métal et ladite couche de composition, une couche intermédiaire d'une résine époxy.

9. Article selon l'une des revendications 5 à 8, caractérisé par le fait que la couche de composition thermoplastique est elle-même revêtue par une couche d'une autre matière thermoplastique ayant une épaisseur de 50 à 5000 µm.

10. Article selon la revendication 9, caractérisé par le fait que l'autre matière thermoplastique est le polyéthylène de densité comprise entre 0,870 et 0,945.

11. Film composite comprenant :
(a) au moins une couche comprenant une composition thermoplastique selon l'une des revendications 1 à 3, avec la condition que la proportion de talc dans ladite composition ne dépasse pas la proportion suffisante pour procurer un effet anti-bloquant, et
(b) au moins une couche d'une autre matière thermoplastique.

## Revendications (Revendications pour l'(les) Etat(s) contractant(s) suivant(s): ES)

1. Procédé de fabrication d'une composition thermoplastique utilisable notamment pour la fabrication de films ayant de bonnes propriétés adhésives, de même que pour la production de films composites et pour le revêtement de métaux, caractérisé par le fait qu'on prépare une composition thermoplastique à base d'un mélange :
(A) d'au moins un polymère ou copolymère partiellement cristallin de l'éthylène ayant une densité se situant entre 0,870 et 0,945 ;
(B) d'au moins un copolymère à base d'éthylène, d'anhydride maléique et facultativement d'acrylate ou méthacrylate d'alkyle ; et, comme additifs,
(C) au moins un caoutchouc ; et
(D) le cas échéant du talc,
par mélange simultané dans un malaxeur ou une extrudeuse des polymères (A) et (B), du caoutchouc (C) et, le cas échéant, du talc (D) ; par malaxage d'un mélange mère de deux composants avec les composants restants ; ou, dans le cas où le talc est présent, par mélange du polymère (A) et du talc (D) préalablement enrobé du copolymère (B), l'enrobage ayant été effectué par l'introduction du talc dans une solution du copolymère (B), puis évaporation du solvant, ledit solvant étant notamment choisi parmi les hydrocarbures aliphatiques, cycloaliphatiques et aromatiques en C₅-C₁₂, les cétones, les hydrocarbures chlorés, les acétates et esters de polyols, et, de préférence, la concentration du copolymère (B) dans ledit solvant ne dépassant pas environ 15% en poids.

2. Procédé selon la revendication 1, caractérisé par le fait qu'on prépare une composition comprenant un mélange :
- de 25 à 80% en poids dudit constituant (A) ;
- de 15 à 85% en poids dudit constituant (B) formé d'au moins un copolymère au hasard, comprenant :
(a) de 83 à 99,7% en moles de motifs dérivés de l'éthylène ;
(b) de 0 à 14% en moles de motifs dérivés d'au moins un ester de l'acide acrylique ou méthacrylique ; et
(c) de 0,3 à 3% en moles de motifs dérivés de l'anhydride maléique ;
et ayant un indice de fusion de 1 à 500 dg/min ; et
- de 1 à 8% en poids d'au moins un caoutchouc (C) ; et
- de 0 à 8% en poids de talc (D).

3. Procédé selon l'une des revendications 1 et 2, caractérisé par le fait qu'on choisit le caoutchouc parmi le caoutchouc butyle, les caoutchoucs éthylène-propylène, les caoutchoucs éthylène-propylène-diène et leurs mélanges.

4. Film ayant des propriétés adhésives obtenu à partir de la composition thermoplastique telle que définie, ou préparée par le procédé tel que défini, à l'une des revendications 1 à 3.

5. Article industriel comprenant un métal revêtu par au moins une couche d'une composition thermoplastique telle que définie, ou préparée par le procédé tel que défini, à l'une des revendications 1 à 3.

6. Article selon la revendication 5, caractérisé par le fait que l'épaisseur de la couche de composition thermoplastique va de 10 à 500 µm.

7. Article selon l'une des revendications 5 et 6, caractérisé par le fait que l'indice de fusion du copolymère (B) dans la composition thermoplastique va de 2 à 10 dg/min.

8. Article selon l'une des revendications 5 à 7, caractérisé par le fait que le métal revêtu comprend en outre entre ledit métal et ladite couche de composition, une couche intermédiaire d'une résine époxy.

9. Article selon l'une des revendications 5 à 8, caractérisé par le fait que la couche de composition thermoplastique est elle-même revêtue par une couche d'une autre matière thermoplastique ayant une épaisseur de 50 à 5000 µm.

10. Article selon la revendication 9, caractérisé par le fait que l'autre matière thermoplastique est le polyéthylène de densité comprise entre 0,870 et 0,945.

11. Film composite comprenant :
(a) au moins une couche comprenant une composition thermoplastique telle que définie, ou préparée par le procédé tel que défini, à l'une des revendications 1 à 3, avec la condition que la proportion de talc dans ladite composition ne dépasse pas la proportion suffisante pour procurer un effet anti-bloquant, et
(b) au moins une couche d'une autre matière thermoplastique.

## Claims (Claims for the following Contracting State(s): AT, BE, CH, DE, DK, FR, GB, GR, IT, IL, LU, NL, SE)

1. Thermoplastic composition based on a mixture :
(A) of at least one partially crystalline ethylene polymer or copolymer which has a density situated between 0.870 and 0.945;
(B) of at least one random copolymer based on ethylene, maleic anhydride and optionally alkyl acrylate or methacrylate,
characterised in that it comprises, as additives,
(C) at least one rubber and (D) optionally talc.

2. Thermoplastic composition according to Claim 1, characterised in that it comprises a mixture :
- of 25 to 80% by weight of said constituent (A);
- of 15 to 85% by weight of said constituent (B) formed of at least one random copolymer, comprising :
(a) from 83 to 99.7 mol% of units derived from ethylene;
(b) from 0 to 14 mol% of units derived from at least one acrylic or methacrylic ester; and
(c) from 0.3 to 3 mol% of units derived from maleic anhydride;
which has a melt index of 1 to 500 dg/min; and
- of 1 to 8% by weight of at least one rubber (C); and
- of 0 to 8% by weight of talc (D).

3. Thermoplastic composition according to either of Claims 1 and 2, characterised in that the rubber (C) is chosen from butyl rubber, ethylene-propylene rubbers, ethylene-propylene-diene rubbers and their mixtures.

4. Use of the composition as defined in one of Claims 1 to 3, for the manufacture of a film which has adhesive properties.

5. Industrial article comprising a metal coated with at least one layer of a thermoplastic composition according to one of Claims 1 to 3.

6. Article according to Claim 5, characterised in that the thickness of the layer of thermoplastic composition ranges from 10 to 500 µm.

7. Article according to either of Claims 5 and 6, characterised in that the melt index of the copolymer (B) in the thermoplastic composition ranges from 2 to 10 dg/min.

8. Article according to one of Claims 5 to 7, characterised in that the coated metal additionally comprises, between the said metal and the said layer of composition, an intermediate layer of an epoxy resin.

9. Article according to one of Claims 5 to 8, characterised in that the layer of thermoplastic composition is itself coated with a layer of another thermoplastic which has a thickness of 50 to 5000 µm.

10. Article according to Claim 9, characterised in that the other thermoplastic is polyethylene with a density of between 0.870 and 0.945.

11. Composite film comprising :
(a) at least one layer comprising a thermoplastic composition according to one of Claims 1 to 3, with the condition that the proportion of talc in the said composition does not exceed the proportion which is sufficient to provide an antiblocking effect, and
(b) at least one layer of another thermoplastic.

## Claims (Claims for the following Contracting State(s): ES)

1. Process of preparation of a thermoplastic composition especially usable for the manufacture of films which have good adhesive properties, as well as for the production of composite films and for the coating of metals, characterised in that a thermoplastic composition based on a mixture :
(A) of at least one partially crystalline ethylene polymer or copolymer which has a density situated between 0.870 and 0.945;
(B) of at least one random copolymer based on ethylene, maleic anhydride and optionally alkyl acrylate or methacrylate; and, as additives,
(C) at least one rubber; and
(D) optionally talc,
is prepared by simultaneous mixing, in a kneader or an extruder, of the polymers (A) and (B), of the rubber (C) and optionally of talc (D) ; by kneading of a parent mixture of two components with the remaining components; or, when talc is present, by mixing of the polymer (A) and of talc (D) coated with the copolymer (B) beforehand, the coating having been carried out by introducing talc into a solution of the copolymer (B) and then evaporating off the solvent, said solvent being especially chosen from aliphatic, cycloaliphatic and aromatic hydrocarbons containing from 5 to 12 carbon atoms, ketones, chlorinated hydrocarbons, polyol esters and acetates, and, preferably, the concentration of the copolymer (B) in the said solvent not exceeding approximately 15% by weight.

2. Process according to Claim 1, characterised in that a composition comprising a mixture :
- of 25 to 80% by weight of said constituent (A);
- of 15 to 85% by weight of said constituent (B) formed of at least one random copolymer, comprising :
(a) from 83 to 99.7 mol% of units derived from ethylene;
(b) from 0 to 14 mol% of units derived from at least one acrylic or methacrylic ester; and
(c) from 0.3 to 3 mol% of units derived from maleic anhydride;
which has a melt index of 1 to 500 dg/min; and
- of 1 to 8% by weight of at least one rubber (C); and
- of 0 to 8% by weight of talc (D), is prepared.

3. Process according to either of Claims 1 and 2, characterised in that the rubber is chosen from butyl rubber, ethylene-propylene rubbers, ethylene-propylene-diene rubbers and their mixtures.

4. Film having adhesive properties, obtained from the thermoplastic composition as defined in, or as prepared by the process as defined in, one of Claims 1 to 3.

5. Industrial article comprising a metal coated with at least one layer of a thermoplastic composition as defined in, or as prepared by the process as defined in, one of Claims 1 to 3.

6. Article according to Claim 5, characterised in that the thickness of the layer of thermoplastic composition ranges from 10 to 500 µm.

7. Article according to either of Claims 5 and 6, characterised in that the melt index of the copolymer (B) in the thermoplastic composition ranges from 2 to 10 dg/min.

8. Article according to one of Claims 5 to 7, characterised in that the coated metal additionally comprises, between the said metal and the said layer of composition, an intermediate layer of an epoxy resin.

9. Article according to one of Claims 5 to 8, characterised in that the layer of thermoplastic composition is itself coated with a layer of another thermoplastic which has a thickness of 50 to 5000 µm.

10. Article according to Claim 9, characterised in that the other thermoplastic is polyethylene with a density of between 0.870 and 0.945.

11. Composite film comprising :
(a) at least one layer comprising a thermoplastic composition as defined in, or as prepared by the process as defined in, one of Claims 1 to 3, with the condition that the proportion of talc in the said composition does not exceed the proportion which is sufficient to provide an antiblocking effect, and
(b) at least one layer of another thermoplastic.

## Patentansprüche (Patentansprüche für folgende(n) Vertragsstaat(en): AT, BE, CH, DE, DK, FR, GB, GR, IT, LI, LU, NL, SE)

1. Thermoplastische Zusammensetzung auf Basis einer Mischung aus:
(A) wenigstens einem teilweise kristallinen Ethylenpolymer oder -copolymer mit einer Dichte zwischen 0,870 und 0,945,
(B) wenigstens einem Ethylen-, Maleinsäureanhydrid-, und gegebenenfalls Alkylacrylat- oder Alkylmethacrylatcopolymer,
dadurch gekennzeichnet, daß als Additive (C) wenigstens ein Kautschuk (D) gegebenenfalls Talk enthalten sind.

2. Thermoplastische Zusammensetzung nach Anspruch 1, dadurch gekennzeichnet, daß sie eine Mischung aufweist, aus:
- 25 bis 80 Gew.-% des Bestandteils (A),
- 15 bis 85 Gew.-% des Bestandteils (B), das gebildet ist aus wenigstens einem statistischen Copolymer, enthaltend:
(a) 83 bis 99,7 Mol.-% an von Ethylen abgeleiteten Einheiten,
(b) 0 bis 14 Mol.-% an von wenigstens einem Acrylsäure- oder Methacrylsäureester abgeleiteten Einheiten, und
(c) 0,3 bis 3 Mol.-% an von Maleinsäureanhydrid abgeleiteten Einheiten,
mit einem Schmelzindex von 1 bis 500 dg/min; und
- 1 bis 8 Gew.-% wenigstens eines Kautschuks (C) und
- 0 bis 8 Gew.-% Talk (D).

3. Thermoplastische Zusammensetzung nach einem der Ansprüche 1 und 2, dadurch gekennzeichnet, daß der Kautschuk (C) ausgewählt ist aus Butylkautschuk, Ethylen-Propylen-Kautschuk, Ethylen-Propylen-Dien-Kautschuk und deren Mischungen.

4. Verwendung der Zusammensetzung nach einem der Ansprüche 1 bis 3 zur Herstellung eines Films mit Hafteigenschaften.

5. Gewerblicher Gegenstand aus einem mit wenigstens einer Schicht einer thermoplastischen Zusammensetzung nach einem der Ansprüche 1 bis 3 beschichteten Metall.

6. Gegenstand nach Anspruch 5, dadurch gekennzeichnet, daß die Dicke der Schicht der thermoplastischen Zusammensetzung zwischen 10 und 500 µm beträgt.

7. Gegenstand nach Anspruch 5 oder 6, dadurch gekennzeichnet, daß der Schmelzindex des Copolymers (B) in der thermoplastischen Zusammensetzung zwischen 2 und 10 dg/min liegt.

8. Gegenstand nach einem der Ansprüche 5 bis 7, dadurch gekennzeichnet, daß das beschichtete Metall ferner zwischen dem Metall und der Schicht der Zusammensetzung eine Zwischenschicht aus einem Epoxyharz enthält.

9. Gegenstand nach einem der Ansprüche 5 bis 8, dadurch gekennzeichnet, daß die Schicht der thermoplastischen Zusammensetzung selbst mit einer Schicht aus einem weiteren thermoplastischen Material mit einer Dicke von 50 bis 5.000 µm beschichtet ist.

10. Gegenstand nach Anspruch 9, dadurch gekennzeichnet, daß das weitere thermoplastische Material Polyethylen mit einer Dichte von 0,870 bis 0,945 ist.

11. Verbundfilm aus:
(a) wenigstens einer Schicht aus einer thermoplastischen Zusammensetzung nach einem der Ansprüche 1 bis 3, mit der Maßgabe, daß der Anteil an Talk in der Zusammensetzung nicht über dem für eine Anti-Sperrwirkung notwendigen Anteil liegt, und
(b) wenigstens einer Schicht aus einem weiteren thermoplastischen Material.

## Patentansprüche (Patentansprüche für folgende(n) Vertragsstaat(en): ES)

1. Verfahren zur Herstellung einer thermoplastischen Zusammensetzung verwendbar insbesondere zur Herstellung von Filmen mit guten Hafteigenschaften ebenso wie zur Herstellung von Verbundfilmen und zur Beschichtung von Metallen, dadurch gekennzeichnet, daß eine thermoplastische Zusammensetzung auf Basis einer Mischung hergestellt wird, enthaltend:
(A) wenigstens ein teilweise Kristallines Ethylenpolymer oder -copolymer mit einer Dichte zwischen 0,870 und 0,945,
(B) wenigstens ein Ethylen-, Maleinsäureanhydrid- und gegebenenfalls Alkylacrylat- oder Alkylmethacrylatcopolymer und als Additive,
(C) wenigstens einen Kautschuk, und
(D) gegebenenfalls Talk,
durch gleichzeitige Mischung der Polymeren (A) und (B), des Kautschuks (C) und gegebenenfalls von Talk (D) in einem Kneter oder Extruder, durch Kneten eines Grundgemisches zweier Bestandteile mit den übrigen Bestandteilen, oder wenn Talk vorhanden ist, durch Vermischen des Polymeren (A) und des Talks (D), der vorher mit dem Copolymeren (B) beschichtet wurde, wobei die Beschichtung durch Zugabe des Talks in eine Lösung des Copolymeren (B) durchgeführt wird, anschließende Verdampfung des Lösemittels, wobei das Lösemittel insbesondere ausgewählt ist aus aliphatischen, cycloaliphatischen und aromatischen C₅-C₁₂-Kohlenwasserstoffen, Ketonen, chlorierten Kohlenwasserstoffen, Acetaten und Estern von Polyolen und wobei vorzugsweise die Konzentration des Copolymeren (B) in dem Lösungsmittel nicht größer ist als etwa 15 Gew.-%.

2. Verfahren nach Anspruch 1, dadurch gekennzeichnet, daß man eine Zusammensetzung herstellt, die ein Gemisch aus:
- 25 bis 80 Gew.-% des Bestandteils (A),
- 15 bis 85 Gew.-% des Bestandteils (B), welches aus wenigstens einem statistischen Copolymeren gebildet ist, enthaltend:
(a) 83 bis 99,7 Mol.-% an von Ethylen abgeleiteten Einheiten,
(b) 0 bis 14 Mol.-% an von wenigstens einem Acrylsäure- oder Methacrylsäureester abgeleiteten Einheiten, und
(c) 0,3 bis 3 Mol.-% an von Maleinsäureanhydrid abgeleiteten Einheiten,
mit einem Schmelzindex von 1 bis 500 dg/min und
- 1 bis 8 Gew.-% wenigstens eines Kautschuks (C), und
- 0 bis 8 Gew.-% Talk (D) enthält.

3. Verfahren nach einem der Ansprüche 1 und 2, dadurch gekennzeichnet, daß der Kautschuk aus Butylkautschuk, Ethylen-Propylen-Kautschuk, Ethylen-Propylen-Dien-Kautschuk und deren Mischungen ausgewählt wird.

4. Film mit Hafteigenschaften erhältlich aus der definierten thermoplastischen Zusammensetzung oder hergestellt mit dem Verfahren nach einem der Ansprüche 1 bis 3.

5. Gewerblicher Gegenstand aus einem mit wenigstens einer Schicht aus der definierten thermoplastischen Zusammensetzung oder einer Schicht, hergestellt mit dem Verfahren nach einem der Ansprüche 1 bis 3 verkleideten Metall.

6. Gegenstand nach Anspruch 5, dadurch gekennzeichnet, daß die Dicke der Schicht der thermoplastischen Zusammensetzung zwischen 10 und 500 µm liegt.

7. Gegenstand nach einem der Ansprüche 5 und 6, dadurch gekennzeichnet, daß der Schmelzindex des Copolymeren (B) in der thermoplastischen Zusammensetzung zwischen 2 und 10 dg/min liegt.

8. Gegenstand nach einem der Ansprüche 5 bis 7, dadurch gekennzeichnet, daß das beschichtete Metall ferner zwischen dem Metall und der Schicht der Zusammensetzung eine Zwischenschicht aus einem Epoxyharz enthält.

9. Gegenstand nach einem der Ansprüche 5 bis 8, dadurch gekennzeichnet, daß die Schicht der thermoplastischen Zusammensetzung selbst mit einer Schicht eines weiteren thermoplastischen Materials mit einer Dicke zwischen 50 und 5.000 µm beschichtet ist.

10. Gegenstand nach Anspruch 9, dadurch gekennzeichnet, daß das weitere thermoplastische Material Polyethylen mit einer Dichte zwischen 0,870 und 0,945 ist.

11. Verbundfilm, enthaltend:
(a) wenigstens eine Schicht aus der definierten thermoplastischen Zusammensetzung oder hergestellt mit dem Verfahren nach einem der Ansprüche 1 bis 3 mit der Maßgabe, daß der Anteil an Talk in der Zusammensetzung nicht über dem für eine Anti-Sperrwirkung notwendigen Anteil liegt, und
(b) wenigstens eine Schicht eines weiteren thermoplastischen Materials.
